# EUROPÄISCHE PATENTSCHRIFT

(11) **EP 1 029 585 B1**
(45) Veröffentlichungstag und Bekanntmachung des Hinweises auf die Patenterteilung: **23.04.2003**
(21) Anmeldenummer: 00102865.3
(22) Anmeldetag: 11.02.2000
(51) Int. Cl.: B01F 13/00, B05C 17/005, A61C 9/00

(54) **Vorrichtung zum Ausgeben gemischter Mehrkomponentenmassen, insbesondere für zahnärztliche Zwecke**
Apparatus for delivering a mixed multi-component substance, in particular for use in dentistry
Dispositif pour délivrer une substance formée d'un mélange de plusieurs composants, utilisé notamment en dentisterie

(30) Priorität: 15.02.1999 DE 29902666 U
(43) Veröffentlichungstag der Anmeldung: 23.08.2000
(73) Patentinhaber: Ernst Mühlbauer GmbH & Co.KG, 25870 Norderfriedrichskoog (DE)
(72) Erfinder: Mühlbauer, Wolfgang, Dr., 22609 Hamburg (DE); Hörth, Hans, 21147 Hamburg (DE)
(74) Vertreter: Glawe, Delfs, Moll & Partner

(56) Entgegenhaltungen:
- EP-A- 0 087 029
- EP-A- 0 730 913
- DE-U- 9 412 703
- DE-U- 29 611 127
- DE-U- 29 818 499
- US-A- 4 432 469
- US-A- 5 249 862
- US-A- 5 609 271

## Beschreibung

Die Erfindung betrifft eine Vorrichtung zum Ausgeben gemischter Mehrkomponenten massen gemäß dem Oberbegriff des Patentanspruchs 1.

Es sind Vorrichtungen zum Ausgeben gemischter Mehrkomponentenmassen, insbesondere für zahnärztliche Zwecke, bekannt (EP-A 492 413, EP-A 730 913), die zum einen aus einem Gerät zum Ausbringen der Komponenten in einem vorbestimmten, konstanten Volumenverhältnis durch entsprechende Auslaßöffnungen und zum anderen aus einer auswechselbaren Mischdüse bestehen, die an die Auslaßöffnungen des Ausbringgeräts anschließbare Einlaßöffnungen und daran anschließende, gesonderte Strömungswege enthält, die zu einem Mischraum führen. Dies trifft sowohl für Mischdüsen von statischer Bauart (feststehende Mischschikanen im Mischraum) als auch für Mischdüsen dynamischer Art (umlaufende Mischerflügel) zu. Die Ausgabe der Komponenten in dem für die Aushärtung der Masse erforderlichen Mischungsverhältnis wird im Grundsatz durch das Ausbringgerät sichergestellt. Das gilt auch bei unterschiedlichem Strömungsverhalten der Komponenten aufgrund unterschiedlicher Fließgrenzen.

Wenn Komponenten in ungleichem Verhältnis zu mischen sind, sieht der Stand der Technik für die größere Menge im allgemeinen auch größere Querschnitte des entsprechenden Strömungswegs vor (EP 730 913 A1, EP 0 993 863 A2). Dies ist erforderlich, damit die Komponenten, die gleichzeitig beginnen, die Strömungswege zu füllen, auch gleichzeitig beginnen, in den Mischraum einzutreten. Wird z.B. von einer ersten Komponente dreimal soviel zugeführt wie von einer zweiten Komponente, so muß der Strömungsweg für die erste Komponente auch das dreifache Volumen haben, damit beide Strömungswege gleichzeitig gefüllt werden und gleichzeitig die Komponenten beginnen, in den Mischraum einzutreten.

Jedoch zeigt sich, daß manche Massen mehr als andere zu einem sogenannten Vorlaufen neigen. Darunter versteht man, daß bei beginnendem Auspressen der Komponenten eine Komponente den Mischraum früher erreicht als die andere Komponente oder die anderen Komponenten und dann ein vorlaufender Teil der einen Komponente den Mischraum durchläuft, ohne hinreichend mit den anderen Komponenten gemischt worden zu sein. Dieser Anteil des Produkts kann bei der weiteren Verarbeitung zu Problemen führen. Manchmal ist es die dünnflüssigere Komponente, die zum Vorlaufen neigt. Wenn eine oder beide Komponenten thixotrope Eigenschaften haben, kommt es oft mehr darauf an, bei welcher Komponente der Übergang von der steiferen Konsistenz zur fließfähigen Konsistenz eher stattfindet, d. h. bei welcher sozusagen die Viskosität schneller zusammenbricht. Es können aber auch die Form der zur Mischdüse führenden Strömungswege oder unterschiedliche anfängliche Auspreßdrücke bei den einzelnen Komponenten zum Vorlaufen einer Komponente führen. Diese Probleme werden beim Stand der Technik nicht gelöst, wo nur daran gedacht ist, das Verhältnis der Volumina der Strömungswege gleich dem Zugabeverhältnis der Komponenten zu machen (EP 0 993 863 A2). Die vorliegende Erfindung läßt die jeweiligen Gründe dahingestellt. Sie setzt sich zum Ziel, die Nachteile des Vorlaufens zu vermindern.

Dieses Ziel wird erfindungsgemäß durch die Merkmale des Anspruchs 1 erreicht.

Zweckmäßige Weiterbildungen der Erfindung sind Gegenstand der abhängigen Ansprüche.

Danach ist vorgesehen, daß im Strömungsweg der zum Vorlaufen neigenden Komponente zwischen der entsprechenden Einlaßöffnung des Mischers und deren Mündung zum Mischraum hin ein Speichervolumen vorgesehen ist, das das zu erwartende Vorlaufvolumen der entsprechenden Komponente aufnimmt. Diese erreicht den Mischraum daher entsprechend später, und zwar bei genauer Übereinstimmung des Speichervolumens mit dem Vorlaufvolumen gleichzeitig mit der anderen Komponente. Die erfindungsgemäße Bereitstellung eines Speichervolumens für das Vorlaufvolumen ist zusätzlich zu dem Volumen vorgesehen, das auf die Querschnittsbemessung gemäß bekannten strömungstechnischen Grundsätzen zurückgeht. Ein Speichervolumen im Sinne der vorliegenden Erfindung liegt daher dann vor, wenn das Verhältnis der Volumina des ersten und des zweiten Strömungswegs größer ist als das Mischungsverhältnis der ihnen zugeordneten Komponenten. Wenn zusätzlich zu einer Engstelle, die der Strömungsbegrenzung einer dünnflüssigen Komponente dient, eine Volumenerweiterung vorgesehen ist, so ist dies ein Hinweis derart, daß es sich bei letzterer um ein Speichervolumen im Sinne der vorliegenden Erfindung handelt.

Die Anordnung des Speichervolumens im Strömungsweg der zum Vorlaufen neigenden Komponente schließt nicht aus, daß zusätzlich auch noch andere Mittel vorgesehen sind, die dem Vorlaufen entgegenwirken oder im Falle einer niedrigeren Viskosität der zum Vorlaufen neigenden Komponente zur Vergleichmäßigung des Strömungswiderstands beitragen, insbesondere eine Drosselstelle.

Wenn eine Mischdüse (entsprechend den Vorgaben eines bestimmten Ausbringgeräts) übereinstimmende Einlaßöffnungen aufweist, denen unterschiedlich gestaltete Strömungswege folgen, sollte Vorsorge dafür getroffen sein, daß die Mischdüse nur in der "richtigen" Orientierung an das Ausbringgerät angesetzt werden kann. Dafür sind zweckmäßigerweise zusammenwirkende Zuordnungssicherungseinrichtungen an dem Ausbringgerät und der Mischdüse vorgesehen.

Die Erfindung ist sowohl bei dynamischen als auch statischen Mischdüsen verwendbar. Besondere Vorteile hat sie jedoch im Zusammenhang mit dynamischen Mischdüsen. Diese werden nämlich vornehmlich eingesetzt, wenn an die Mischqualität besonders hohe Anforderungen gestellt werden und daher eine Verringerung der Mischqualität durch Vorlauf besonders stark ins Gewicht fällt und/oder wenn Komponenten benutzt werden, die sich schwer mischen lassen und bei denen erfahrungsgemäß auch das Vorlaufproblem besonders ausgeprägt ist.

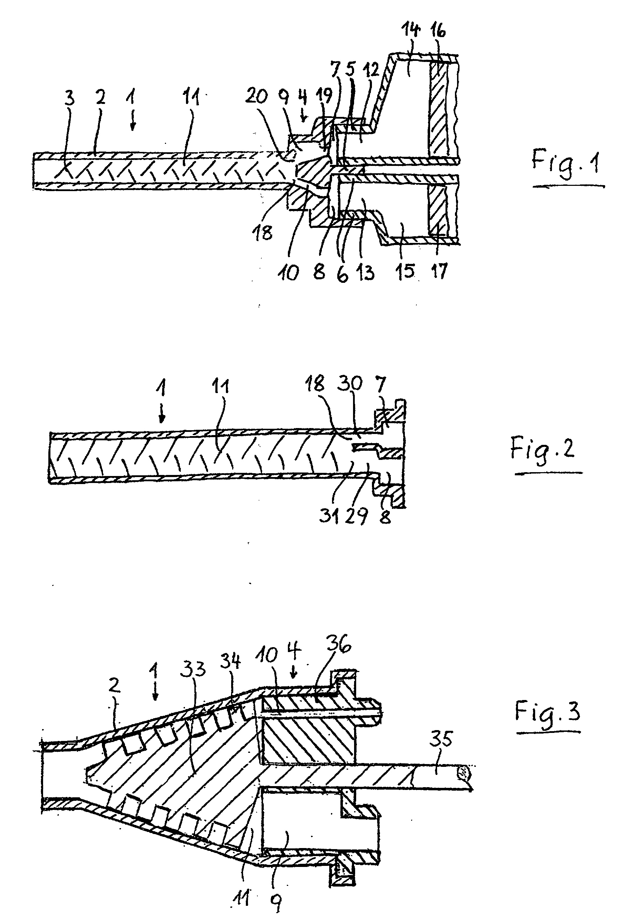

Die Erfindung wird im folgenden näher unter Bezugnahme auf die Zeichnung erläutert. Darin zeigen Fig. 1 bis 3 unterschiedliche Ausführungsbeispiele im Längsschnitt.

Die Mischdüse 1 besteht in den Fällen der Fig. 1 und 2 aus einem Mischrohr 2, das statische Mischschikanen 3 enthält, und einem Verbindungsstück 4, das zwei achsparallel angeordnete, von zylindrischen Wänden 5 bzw. 6 gebildete Einlaßöffnungen 7, 8 enthält. Diese stehen im Beispiel der Fig. 1 über Strömungswege 9 bzw. 10 mit dem von dem Mischrohr 2 eingeschlossenen Mischraum 11 in Verbindung. Die Einlaßöffnungen 7, 8 sind mit entsprechenden Auslaßöffnungen 12, 13 eines Ausbringgeräts verbindbar, die von zylindrischen Wänden umschlossen werden, die dicht in die Wände 5, 6 passen. Die Auslaßöffnungen 12, 13 gehören zu Kartuschen 14, 15, die die zu mischenden Komponenten enthalten, die durch Vorwärtsbewegung von Kolben 16, 17 aus den Auslaßöffnungen 12, 13 ausgepreßt werden können. Die Kartuschen sind mit unterschiedlichem Durchmesser dargestellt. Dies soll bedeuten, daß die darin befindlichen Komponenten bei synchronem Vorschub der Kolben 16, 17 in unterschiedlicher Menge, aber konstantem Volumenverhältnis aus den Auslaßöffnungen 12, 13 in die Einlaßöffnungen 7, 8 der Mischdüse 1 übertreten. Auf die Darstellung weiterer Einzelheiten des Ausbringgeräts wurde ebenso verzichtet wie auf die Darstellung derjenigen Mittel, die zur Sicherung des Anschlusses der Mischdüse 1 an die Kartuschen 14, 15 vorgesehen sein mögen.

Von der Einlaßöffnung 8 führt ein Kanal 10 von etwa konstantem Querschnitt zum Mischraum 11. Er endet an der Stelle 18, wo sich der Kanal 10 in den Mischraum 11 hinein öffnet. Der andere Strömungsweg 9, der von der Einlaßöffnung 7 zum Mischraum 11 führt, zeichnet sich im Unterschied zu dem Kanal 10 durch einen wesentlich größeren Querschnitt und daher ein größeres Aufnahmevolumen in seinem mittleren Bereich aus. Sein Eingangsquerschnitt 19 ist aber gegenüber dem mittleren Querschnitt beträchtlich verringert und kann beispielsweise die Weite des Kanals 10 erreichen. Desgleichen verringert sich der Querschnitt des Strömungswegs 9 im Bereich 20, wo dieser im Mischraum 11 mündet.

Wenn die in der Kartusche 14 befindliche Komponente eine geringere Fließgrenze als diejenige in der Kartusche 15 besitzt, kann es geschehen, daß sie bei etwa gleichem Vorschub der Kolben 16, 17 die Auslaßöffnung 12 (und ggf. weitere zu dieser Auslaßöffnung hinführende Kanäle) rascher durchdringt als die andere Komponente und daher früher die Einlaßöffnung 7 erreicht als die andere Komponente die Einlaßöffnung 8. Dadurch aber, daß der Strömungsweg 9 ein größeres Volumen hat als der Kanal 10, nimmt die Füllung des Strömungswegs 9 eine gewisse Zeit in Anspruch, die so bemessen ist, daß die Komponente aus der Kartusche 14 die Übergangsstelle 20 zum Mischraum 11 ungefähr im gleichen Zeitraum erreicht, in welchem die andere Komponente Gelegenheit hatte, den Kanal 10 zu durchdringen und dessen Mündung 18 zum Mischraum 11 zu erreichen.

Die Engstellen 19, 20 üben auf die durchströmende Masse einen stärkeren Widerstand (Drosselwirkung) als der weitere, mittlere Abschnitt des Strömungswegs 9 aus. Dies kann dann von Bedeutung sein, wenn die aus der Kartusche 14 stammende Komponente eine niedrigere Viskosität als diejenige aus der Kartusche 15 hat. Wenn der Viskositätsunterschied gering ist oder fehlt, kann es sich empfehlen, auf diese Engstellen zu verzichten. Letzteres ist in dem Ausführungsbeispiel gemäß Fig. 2 gezeigt, in der gleiche Bezugsziffern die oben erläuterten Teile bedeuten. Von der Einlaßöffnung 7 führt ein Strömungsweg 30 zu der Stelle 18, wo er in den Mischraum 11 mündet. Desgleichen führt ein Strömungsweg 29 von der Einlaßöffnung 8 zu der Mündungsstelle 31. Der Strömungsweg 29 ist weiter als der Strömungsweg 30 und hat daher ein größeres Aufnahmevolumen, das dazu geeignet ist, ein Vorlaufvolumen der Komponente aufzunehmen, die der Einlaßöffnung 8 zugeordnet ist. Auf Drosselstellen wurde verzichtet.

Fig. 3 zeigt die Anwendung der Erfindung bei einer dynamischen Mischdüse. Das Mischrohr 2 enthält statt statischer Mischschikanen 11 einen Mischrotor mit am Umfang angeordneten. Flügeln 34, der über eine Welle 35 drehend angetrieben wird. Das Verbindungsstück 4 enthält einen Einsatz 36, in welchem ein weiter Strömungsweg 9 und ein dünner Strömungsweg 10 gebildet sind, die im Mischraum 11 münden. Es trifft darauf die oben unter Bezugnahme auf Fig. 1 und 2 gegebene Beschreibung zu.

Die Fig. zeigen die unterschiedliche Ausdehnung der Strömungskanäle 9, 10 in der radialen Schnittebene. In Umfangsrichtung hat man sich bei den dargestellten Beispielen die Ausdehnung ähnlich vorzustellen. Insbesondere bei dynamischen Mischdüsen, bei denen im Kopfbereich eine Nabe für die Mischerwelle gebildet ist, ist der Ausdehnungsbereich in Radialrichtung beschränkt, so daß es zweckmäßig sein kann, die unterschiedliche Volumenausdehnung hauptsächlich in der Umfangsrichtung verlaufen zu lassen.

## Patentansprüche

1. Vorrichtung zum Ausgeben gemischter Mehrkomponentenmassen, insbesondere für zahnärztliche Zwecke, bestehend aus einem Gerät zum verhältnisgleichen Ausbringen der Komponenten durch ihnen zugeordnete, getrennte Auslaßöffnungen (12, 13) und einer auswechselbaren Mischdüse (1) mit an die Auslaßöffnungen anschließbaren Einlaßöffnungen (7, 8), von denen gesonderte Strömungswege (9, 10, 29, 30) zu einem Mischraum (11) führen, wobei ein erster Strömungsweg (9, 29) ein größeres Volumen als wenigstens ein zweiter Strömungsweg (10, 30) auf weist, **dadurch gekennzeichnet, daß** der erste Strömungsweg (9, 29) einer zum Vorlaufen neigenden Komponente zugeordnet ist und das Verhältnis der Volumina des ersten und des zweiten Strömungswegs (9, 10, 29, 30) größer ist als das Mischungsverhältnis der ihnen zugeordneten Komponenten.

2. Vorrichtung nach Anspruch 1, **dadurch gekennzeichnet, daß** der Strömungsweg der zum Vorlaufen neigenden Komponente eine Drosselstelle (19, 20) enthält.

3. Vorrichtung nach Anspruch 1 oder 2, **dadurch gekennzeichnet, daß** das Ausbringgerät und die Mischdüse (1) mit zusammenwirkenden Zuordnungssicherungseinrichtungen versehen sind.

4. Vorrichtung nach einem der Ansprüche 1 bis 3, **dadurch gekennzeichnet, daß** die Mischdüse dynamischer Bauart ist.

5. Vorrichtung nach Anspruch 4, **dadurch gekennzeichnet, daß** die Mischdüse zwischen den Einlaßöffnungen und dem Mischraum einen Bereich aufweist, in welchem den verschiedenen Einlaßöffnungen Kammern mit unterschiedlicher Umfangserstreckung zugeordnet sind.

## Claims

1. Device for dispensing mixed multi-component compositions, in particular for dentistry purposes, consisting of an apparatus for proportional delivery of the components through separate outlet orifices (12, 13) assigned thereto and of a replaceable mixing nozzle (1) having inlet orifices (7,8) which can be connected to said outlet orifices, from which inlet orifices separate flow channels (9, 10, 29, 30) lead to a mixing chamber (11), a first flow channel (9, 29) having a greater volume than at least a second flow channel (10, 30), **characterised in that** the first flow channel (9, 29) is assigned to a component tending to run ahead and the ratio of the volumes of the first and the second flow channels (9, 10, 29, 30) is greater than the mixing ratio of the components assigned thereto.

2. Device according to Claim 1, **characterised in that** the flow channel of the component tending to run ahead contains a throttle point (19, 20).

3. Device according to Claim 1 or 2, **characterised in that** the delivery apparatus and the mixing nozzle (1) are provided with interacting assignment-safeguarding devices.

4. Device according to one of Claims 1 to 3, **characterised in that** the mixing nozzle is of dynamic construction.

5. Device according to Claim 4, **characterised in that** the mixing nozzle has a region, between the inlet orifices and the mixing chamber, in which chambers of different circumferential extent are assigned to the various inlet orifices.

## Revendications

1. Dispositif pour distribuer des pâtes mixtes à plusieurs composants, en particulier à des fins dentaires, constitué d'un appareil pour distribuer de manière uniforme les composants à travers des orifices de sortie (12, 13) séparés qui leur sont affectés, et d'une buse de mélange (1) échangeable présentant des orifices d'entrée (7, 8) qui peuvent être raccordés aux orifices de sortie et desquels des voies d'écoulement (9, 10, 29, 30) séparées conduisent à une chambre de mélange (11), une première voie d'écoulement (9, 29) présentant un plus grand volume qu'au moins une deuxième voie d'écoulement (10, 30), **caractérisé en ce que** la première voie d'écoulement (9, 29) est affectée à un composant tendant à s'écouler en premier et le rapport des volumes de la première et de la deuxième voie d'écoulement (9, 10, 29, 30) est supérieur au rapport de mélange des composants qui leur sont affectés.

2. Dispositif selon la revendication 1, **caractérisé en ce que** la voie d'écoulement du composant tendant à s'écouler en premier contient un emplacement d'étranglement (19, 20).

3. Dispositif selon la revendication 1 ou 2, **caractérisé en ce que** l'appareil de distribution et la buse de mélange (1) sont pourvus de dispositifs de sûreté d'affectation coopérant entre eux.

4. Dispositif selon l'une des revendications 1 à 3, **caractérisé en ce que** la buse de mélange est de type dynamique.

5. Dispositif selon la revendication 4, **caractérisé en ce que** la buse de mélange présente, entre les orifices d'entrée et le compartiment de mélange, une zone dans laquelle des chambres d'étendue périphérique différente sont affectées aux différents orifices d'entrée.
